Europäisches Patentamt

European Patent Office

Office européen des brevets

(11) Veröffentlichungsnummer: **0 307 473 B1**

(19)

(12) **EUROPÄISCHE PATENTSCHRIFT**

(45) Veröffentlichungstag der Patentschrift: **03.06.92**

(21) Anmeldenummer: **87903475.9**

(22) Anmeldetag: **19.03.87**

(86) Internationale Anmeldenummer:
**PCT/SU87/00031**

(87) Internationale Veröffentlichungsnummer:
**WO 88/06937 (22.09.88 88/21)**

(51) Int. Cl.⁵: **B23K 20/06**, B21D 26/14

(54) **ENTLADUNGSANORDNUNG FÜR MAGNETO-PULSIERUNGEN BEI DER BEHANDLUNG UND BEIM SCHWEISSEN VON METALLEN.**

(43) Veröffentlichungstag der Anmeldung:
**22.03.89 Patentblatt 89/12**

(45) Bekanntmachung des Hinweises auf die Patenterteilung:
**03.06.92 Patentblatt 92/23**

(84) Benannte Vertragsstaaten:
**DE FR GB IT**

(56) Entgegenhaltungen:
**SU-A- 367 498**
**SU-A- 410 502**
**SU-A- 1 046 816**

(73) Patentinhaber: **INSTITUT ELEKTROSVARKI IMENI E.O.PATONA AKADEMII NAUK UKRAINSKOI SSR**
**ul. Bozhenko, 11**
**Kiev, 252650(SU)**

(72) Erfinder: **DUDKO, Daniil Andreevich**
**ul. A.Barbjusa, 22/26-113**
**Kiev, 252150(SU)**
Erfinder: **CHUDAKOV, Vyacheslav Andreevich**
**ul. A.Barbjusa, 22/26-48**
**Kiev, 252150(SU)**

(74) Vertreter: **Patentanwälte Zellentin & Partner**
**Zweibrückenstrasse 15**
**W-8000 München 2(DE)**

EP 0 307 473 B1

## Beschreibung

Die Erfindung bezieht sich auf eine Entladungsvorrichtung zur Metallbearbeitung und -schweissung durch magnetische Impulse nach dem Oberbegriff des Anspruchs 1.

Die Schaffung einer steuerbaren induktionsarmen (bis zu 15nH) Starkstrom-, Luft-, Funken-Entladungsvorrichtung, die es gestattet, Ströme bis zu 6OOOOO A zu schalten, und eine Lebensdauer der Arbeitselektroden von nicht unterhalb von $10^5$ Schaltoperationen aufweist, ist ein aktuelles Problem auf dem Gebiet der Entwicklung von Starkstromschaltgeräten.

Die Aktualität des Problems wird durch eine weite Anwendung von steuerbaren Luftentladern in magnetischen Impulsanlagen (s. z.B. den SU-Urheberschein 534OO4, Klasse HOIT 5/OO, I974) bestimmt, die die Vakuumentlader trotz ihrer Vorteile hinsichtlich einer längeren Lebensdauer der Arbeitselektroden und einer niedrigeren Eigeninduktivität verdrängen.

Die Vakuumentlader erfordern eine kompliziertere Ausrüstung einschliesslich der Vakuumpumpen, was deren Einsatz in leistungsfähigen Anlagen erschwert.

Es ist eine Entladungsvorrichtung nach dem Oberbegriff des Anspruchs 1 zur Metallbearbeitung und -schweissung durch magnetische Impulse (s. den SU-Urheberschein 524267, Klasse HOIT I/OO, I973) bekannt, die eine Entladungskammer mit einem Deckel enthält, in deren Innerem zwei Arbeitselektroden und eine Zündelektrode gleichachsig angeordnet sind,wobei zwischen den Arbeitselektroden eine Isolierzwischenlage untergebracht ist, und die eine der Arbeitselektroden mit dem Pluspotential einer Kondensatorbatterie elektrisch und die zweite Arbeitselektrode mit dem Minuspotentiel der Kondensatorbatterie über einen Induktor verbunden ist.

Die Arbeitselektroden und die Zündelektrode sind auf einer Seite der Oberfläche eines Dielektrikums und die Stromzuführung für den Rückstrom auf der anderen Seite des Dielektrikums angeordnet.

Zwischen der Stromzuführung für den Rückstrom und dem Dielektrikum liegt eine isolierte stromleitende Abschirmung, die für eine Eingrenzung einer Plasmaentladung sorgt.

Die Anordnung der Arbeitselektroden auf der Oberfläche des Dielektrikums, das sich im Bereich einer starken thermischen und dynamischen Plasmaeinwirkung befindet, macht das Dielektrikum schnell unbrauchbar und ist nicht in der Lage, eine strenge Stabilität des Entladungskanals zu sichern, weshalb keine stabile Eigeninduktivität der Entladungsvorrichtung zu verzeichnen ist, d.h. die Parameter des Entladungskreises unterliegen Schwankungen. Da in der Entladungsvorrichtung eine sichere Isolation fehlt, so entfällt auch die Frage der Widerstandsfähigkeit, der Lebensdauer der Arbeitselektroden, d.h. die Konstruktion des Entladers erweist sich als arbeitsunfähig bei der Serien- und Massenfertigung.

Der Erfindung liegt die Aufgabe zugrunde, eine Entladungsvorrichtung zur Metallbearbeitung und -schweissung durch magnetische Impulse zu schaffen, die es gestattet, Ströme von nicht unterhalb von 6OOOOO A bei einer Widerstandsfähigkeit der Arbeitselektroden von nicht unterhalb von $10^5$ Schaltoperationen sicher und stabil hinsichtlich der Arbeit der den Entladungskanal für das Plasma stabilisierenden Zündelektrode zu schalten.

Die gestellte Aufgabe wird durch die Merkmale des Anspruchs 1 gelöst.

Vorteilhaft ist, dass der stromleitende Teil der ersten Arbeitselektrode eine Zylinderbuchse mit von der Innenseite der Stirnenden der Zylinderbuchse ausgehenden Kegelflächen, an deren einer der Arbeitsteil der ersten Arbeitselektrode anliegt, darstellt, wobei der Durchmesser des an der Zylinderbuchse anliegenden T-förmigen Arbeitsteiles kleiner als der Durchmesser der Zylinderbuchse ist.

Die Ausführung und Anordnung der Arbeitselektroden und der Zündelektrode ermöglichen eine Plasmaverteilung über eine grosse Oberfläche der Arbeitselektroden, wodurch deren Lebensdauer dank einer Verringerung der Erosion vergrössert wird, die Verringerung ihrer Eigen induktivität bis auf 15 nH (Nanohenry) gestattet es, dabei Ströme von über 6OOOOO A zu schalten.

Es ist möglich, den an der Innenseite angeordneten Ansatz der zweiten Arbeitselektrode in Form eines ringförmigen Angusses halb toroidaler Form auszuführen, der dem Arbeitsteil der ersten Arbeitselektrode zugekehrt ist, und von der entgegengesetzten Seite des Ansatzes eine Isolationsbuchse anzuordnen, deren am Arbeitsteil der Arbeitselektrode anliegendes Stirnende kegelig ausgebildet ist, auf der Kegelfläche mindestens einen Ringdurchlass auszuführen und die zweite Arbeitselektrode am Gehäuse der Entladungskammer zu befestigen.

Um die Betriebsdauer zu vergrössern, ist es vorteilhaft, die Zündelektrode aus zwei symmetrischen Teilen auszuführen, die mit der Möglichkeit einer gegeneinander gerichteten Bewegung des einen Teiles in bezug auf den anderen angeordnet sind.

Um die Induktivität der Stromschienen in der Entladungsvorrichtung gering zu halten, ist es vorteilhaft,

die stromzuführenden Elemente als voneinander durch ein Dielektrikum getrennte flache Stromschienen auszubilden und sie am Gehäuse der Entladungsvorrichtung starr zu befestigen.

Die Verwendung des ringförmigen Angusses halb toroidaler Form an der zweiten Arbeitselektrode gestattet es, die thermische Wirkung des Plasmas auf die Isolationsbuchse zu vermindern, während ein Durchlass bei dieser es erlaubt, die Energiezufuhr zu den Arbeitselektroden zu steigern.

Die Anwendung der flachen Stromschienen in der Konstruktion des Entladers gestattete es, die Induktivität der stromzuführenden Elemente um das Zweifache zu verringern und folglich die elektrotechnischen Kennwerte des Entladers zu verbessern.

Die Konstruktion des Entladers sieht vor,dass der Deckel der Gasentladungskammer Kanäle für die Luftzuführ zum Bereich der maximalen Plasmawirkung und für die Luftableitung aus diesem Bereich aufweist.

Die Sicherheit der Auslösung der Entladungsvorrichtung wird durch eine Luftspülung der Gasentladungskammer im Bereich der maximalen Plasmawirkung sowie durch die konstruktive Anordnung der Zündelektrode zwischen den Arbeitselektroden gewährleistet.

Die Erfindung soll nachstehend anhand von Ausführungsbeispielen unter Bezugnahme auf Zeichnungen näher erläutert werden. Es zeigt:

Fig. 1 die Gesamtansicht einer erfindungsgemässen Entladungsvorrichtung zur Metallbearbeitung und -schweissung durch magnetische Impulse;

Fig. 2 eine Weiterbildung der Entladungsvorrichtung.

Bevorzugte Ausführungsformen der Erfindung

Eine erfindungsgemässe Entladungsvorrichtung zur Metallbearbeitung und -schweissung durch magnetische Impulse enthält eine Gasentladungskammer 1 mit einem Metalldeckel 2, in deren Innerem zwei Arbeitselektroden 3, 4 und eine Zündelektrode 5 untergebracht sind.

Die eine Arbeitselektrode 3 enthält miteinander starr verbunden eine Zylinderbuchse 6 mit von der Innenseite der Zylinderbuchse 6 ausgeführten Kegelflächen und einen an einer der Kegelflächen anliegenden Arbeitsteil 7.

Der Arbeitsteil 7 der Elektrode 3 weist eine T-Form auf, wobei der Durchmesser des an der Zylinderbuchse 6 anliegenden Arbeitsteiles 7 der Arbeitselektrode 3 kleiner als der Durchmesser der Zylinderbuchse 6 ist, während die Kopplung der Zylinderbuchse 6 und des T-förmigen Arbeitsteiles 7 der Arbeitselektrode 3 durch die Kegelfläche erfolgt. Die Zylinderbuchse 6 stellt einen stromleitenden Teil der Arbeitselektrode 3 dar.

Zur Erleichterung des Betriebes und zur schnellen Auswechselung des Arbeitsteiles 7 der Arbeitselektrode 3 werden der Arbeitsteil 7 und die Zylinderbuchse 6 miteinander mit Hilfe einer Spannschraube 8 verbunden.

Die zweite an der Entladungskammer 1 befestigte Arbeitselektrode 4 stellt eine Buchse dar, an deren einem dem Arbeitsteil 7 der ersten Elektrode 3 zugekehrten Ende Ansätze 9 und 10 an der Aussen- und Innenseite der Buchse ausgeführt sind, wodurch ein vergrössert Arbeitsteil 11 der Arbeitselektrode 4 gebildet wird.

Die Arbeitselektrode 4 ist von der Arbeitselektrode 3 durch eine Isolationsbuchse 12 getrennt.

Die Arbeitselektroden 3 und 4 sind konzentrisch und ihre Arbeitsteile 7 und 11 mit einem Spalt zueinander angeordnet.

Im Spalt zwischen den Arbeitsteilen 7 und 11 der Arbeitselektroden 3 und 4 ist die Zündelektrode 5 angeordnet, die am Deckel 2 der Entladungskammer 1 an einem Isolator 13 befestigt ist.

Die Zündelektrode 5 ist in Form eines Ringes mit parallel zur Achse verlaufenden Öffnungen 14 zur Verkürzung der Dauer der Plasmawirkung auf die Arbeitsteile 7 und 11 der Arbeitselektroden 3 und 4 ausgeführt.

Im Deckel 2 der Gasentladungskammer 1 sind Kanäle 15 ausgeführt, durch die die Luft zur Abkühlung der Arbeitsteile 7 und 11 der Arbeitselektroden 3 und 4 und zur Entgasung der Gasentladungskammer 1 zugeführt wird.

Die Zylinderbuchse 6 der Arbeitselektrode 3 ist in ihrem Unterteil über die Isolationsbuchse 12 am Gehäuse 16 der Entladungsvorrichtung befestigt, in deren Innerem in Kontakt mit der Entladungskammer 1 eine mit der Arbeitselektrode 4 elektrisch gekoppelte Sammelelektrode 17 angeordnet ist.

Die Sammelelektrode 17 ist über ein Koaxialkabel 18 mit dem Pluspotential einer Kondensatorbatterie 19 verbunden, während deren Minuspotential mit dem Gehäuse 16 der Entladungsvorrichtung verbunden ist, das einen Zylinderteil 2O mit einer daran befestigten stromabnehmenden Platte 21 aufweist. Die stromabnehmende Platte 21 ist durch eine Isolierzwischenlage 22 von einer zweiten an der Arbeitselektrode 3 befestigten stromabnehmenden Platte 23 isoliert.

An die stromabnehmenden Platten 21 und 23 ist ein Induktor 24 angeschlossen.

Die Arbeitsweise der Entladungsvorrichtung zur Metallbearbeitung und -schweissung durch magnetische Impulse ist wie folgt:

Das Minuspotential der Kondensatorbatterie 19 ist über das Koaxialkabel 18 mit dem Gehäuse 16 der Entladungsvorrichtung und ihr Pluspotential mit der Sammelelektrode 17 und der Entladungskammer 1, in der die Arbeitselektrode 4 befestigt ist, elektrisch verbunden. Nach der Aufladung der Kondensatorbatterie 19 auf die vorgegebene Arbeitsspannung wird an die Zündelektrode 5 ein Impuls umgekehrter Polarität angelegt, der die Luftstrecke zwischen den Arbeitsteilen 7 und 11 der Arbeitselektroden 3 und 4 ionisiert, wodurch ein Strom geschaltet wird. Der Schaltstrom gelangt, indem er die Arbeitselektroden 3 und 4 der Zylinderbuchse 6 sowie das Gehäuse 16 der Entladungsvorrichtung und deren Zylinderteil 2O durchfliesst, zu den stromnehmenden Platten 21 und 23 und im weiteren zum Induktor 24.

Durch die Ausführung und Anordnung der Arbeitselektroden 3, 4 und der Zündelektrode 5 wird die Plasmaverteilung über eine grosse Oberfläche der Arbeitselektroden 3 und 4 ermöglicht, weshalb deren Eigeninduktivität auf 15 nH absinkt, wodurch sich Ströme oberhalb von 6OOOOO A kommutieren lassen.

Dank der grossen Oberfläche der Arbeitsteile 7 und 11 der Arbeitselektroden 3 und 4 und einem Ring-Zündsystem wird auch für eine minimale Erosion der Arbeitsteile 7 und 11 der Arbeitselektroden 3 und 4 gesorgt, was es gestattet, die Arbeitselektroden 3 und 4 bei über $10^5$ Entladungen bei Schaltströmen von bis zu 6OOOOO A zu betreiben.

Das Ring-Zündsystem sichert praktisch eine gleichmässige Erosion der Arbeitsteile 7 und 11 der Arbeitselektroden 3 und 4, wodurch stabile Arbeitsbedingungen für die Entladungsvorrichtung geschaffen werden.

Die Stabilität der Arbeit der Entladungsvorrichtung wird auch durch Einführung eines Systems zu deren Luftspülung über die Kanäle 15 im Deckel 2 in die Entladungskammer 1 gewährleistet, wo die Luft gleichzeitig die Arbeitselektroden 3 und 4 abkühlt und eine Entgasung der Entladungskammer 1 nach Durchlauf eines Stromimpulses vornimmt.

Nachfolgend wird eine konkrete Ausführungsform einer Entladungsvorrichtung beschrieben.

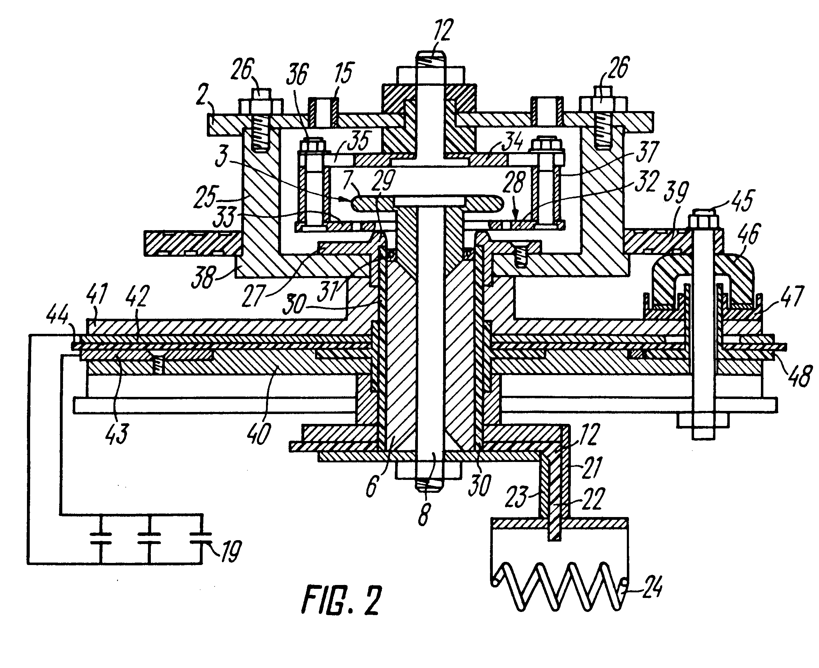

Die Entladungsvorrichtung zur Metallbearbeitung und -schweissung durch magnetische Impulse enthält eine Entladungskammer 25 (Fig. 2), an der mittels Schrauben 26 ein Metalldeckel 2 befestigt wird.

Innerhalb der Entladungskammer 25 sind die erste und die zweite Arbeitselektrode 3 bzw. 27 und eine Zündelektrode 28 gleichachsig angeordnet.

In der vorliegenden Konstruktion der Entladungsvorrichtung ist der dem Arbeitsteil 7 der ersten Arbeitselektrode 3 zugewandte Ansatz der zweiten Arbeitselektrode 27 in Form eines Angusses 29 halb toroidaler Form ausgeführt. Auf der entgegengesetzten Seite dieses Ansatzes der zweiten Arbeitselektrode 27 ist eine Isolationsbuchse 3O angeordnet, deren am Arbeitsteil 7 der ersten Arbeitselektrode 3 anliegendes Stirnende kegelig ausgeführt ist, und auf der Kegelfläche ist eine Ringnut 31 ausgeführt.

Die Ausführung des Ansatzes an der zweiten Arbeitselektrode 27 in Form eines Angusses 29 halb toroidaler Form gestattet es, die thermische Wirkung des Plasmas auf die Isolationsbuchse 3O wesentlich zu verringern, während die Ausführung des Ringdurchlasses (Ringnut) 31 auf der Kegelfläche der Isolationsbuchse 3O den Oberflächenwiderstand gegenüber dem Ladungsabfluss erhöht, weshalb die Entladungsvorrichtung bei einer höheren Spannung arbeiten kann.

Zur Vergrösserung der Betriebsdauer der Zündelektrode 28 wird ihr Ring in Form zweier symmetrischer Teile 32 und 33 ausgeführt, die mit der Möglichkeit einer Bewegung des einen Teiles 32 in bezug auf den anderen Teil 33 aufeinander zu in Abhängigkeit von der Erosion diaser Teile 32 und 33 angeordnet sind.

Auf dem Umfang des Ringes der Zündelektrode 28 sind Öffnungen ausgeführt.

Die Zündelektrode 28 wird am Deckel 2 des Gehäuses 25 mit Hilfe einer Auflagerplatte 34 befestigt, die Radialnuten 35 aufweist. In den Öffnungen der Zündelektrode 28 und in den Radialnuten 35 der Auflagerplatte 34 werden Schrauben 36 mit auf sie aufgesetzten Lagerbuchsen 37 befestigt, die es erlauben, den Spalt zwischen den Arbeitselektroden 3, 27 und der Zündelektrode 28 einzustellen. Darüber hinaus sorgen die Schrauben 36, indem sie sich in den Nuten 35 verschieben, für die Verschiebung der Teile 32 und 33 der Zündelektrode 28 bei deren Auslösung.

Die Gasentladungskammer 25 weist an ihrem Unterteil einen ringförmigen Absalt 38 auf, auf dem eine massive Isolierscheibe 39 mit Durchlässen auf ihrem Umfang angeordnet ist.

Die Gasentladungskammer 25 ist am Gehäuse 4O der Entladungsvorrichtung mit Hilfe eines Flansches 41 befestigt. An der oberen Wand des Gehäuses 4O sind stromzuführende Elemente starr befestigt, die in Form durch ein Dielektrikum 44 getrennter flacher Stromschienen 42, 43 hergestellt sind. Eine Stromschiene 42 ist mit dem Pluspotential und die andere Stromschiene 43 mit dem Minuspotential der Kondensatorbatterie 19 gekoppelt.

In den flachen Stromschienen 42, 43, dem Dielektrikum 44, dem Gehäuse 4O und dem Flansch 41 sind Öffnungen ausgeführt, die zu Öffnungen in der massiven Isolierscheibe 39 koaxial sind, durch die je eine Spannschraube 45 mit Isolierzwischenlagen 46, 47, 48 durchgelassen ist. Die Isolierzwischenlagen 46, 47 werden für die Isolierung der Spannschraube 45 vom Flansch 41 und die Isolierschraube 48 für die Isolierung der Spannschraube 45 von der flachen Stromschiene 43 benötigt.

Die Spannschraube 45 sorgt für eine starre Befestigung der Entladungskammer 25 am Gehäuse 40 der Entladungsvorrichtung und für einen sicheren Kontakt der flachen Stromschienen 42, 43 mit den Bauelementen der Entladungsvorrichtung.

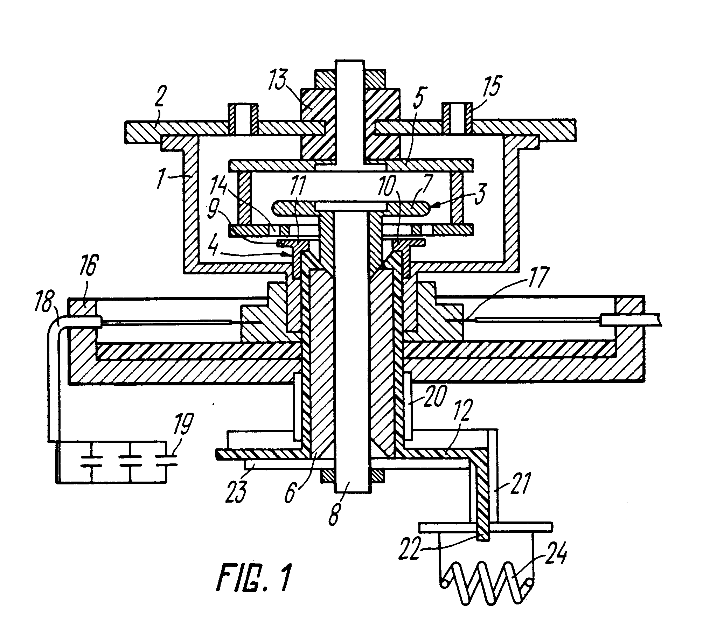

Im übrigen entspricht die Konstruktion der Entladungsvorrichtung nach Fig. 2 der Konstruktion nach Fig. 1. Die Arbeitsweise der Entladungsvorrichtung nach Fig. 2 ist ähnlich wie bei der Vorrichtung nach Fig. 1.

Aus der Beschreibung ist zu ersehen, dass eine dynamisch widerstandsfähige und sichere Konstruktion der Entladungsvorrichtung geschaffen ist, die allen gestellten Aufgaben Rechnung trägt.

Die Erfindung kann im Maschinenbau bei der Herstellung von magnetischen Impulsanlagen sowie in der elektrotechnischen Industrie bei der Schaltung von Starkstromkreisen angewendet werden.

## Patentansprüche

1. Entladungsvorrichtung zur Metallbearbeitung und -schweißung durch magnetische Impulse, die ein Gehäuse (16; 40) mit stromzuführenden Elementen und eine Entladungskammer (1; 25) enthält, in deren Innerem zwei Arbeitselektroden (3, 4) und eine Zündelektrode (5; 28) um eine Achse angeordnet sind und zwischen den Arbeitselektroden eine Isolationsbuchse (12) untergebracht ist, wobei die eine der Arbeitselektroden mit dem Pluspotential und die andere Arbeitselektrode über den Induktor mit dem Minuspotential einer Kondensatorbatterie (19) elektrisch verbunden ist,
dadurch gekennzeichnet, daß die Entladungskammer (1; 25) am Gehäuse (16; 40) befestigt ist, wobei die eine erste Arbeitselektrode (3), die über die stromzuführenden Elemente mit dem Minuspotential der Kondensatorbatterie (19) verbunden ist, einen mit der Arbeitselektrode (3) gekoppelten stromleitenden im Schnitt T-förmigen Arbeitsteil (7) enthält, und die zweite von der ersten Arbeitselektrode (3) durch die Isolationsbuchse (12) getrennte und koaxial zur ersten Arbeitselektrode (3) angeordnete Arbeitselektrode (4, 27) aus einer Buchse besteht, an deren einem dem Arbeitsteil (7) der ersten Arbeitselektrode (3) zugewandten Ende an der Außen- und Innenseite Ansätze (9, 10) einen zweiten vergrößerten Arbeitsteil (11) bilden und im Spalt zwischen den zwei Arbeitsteilen (7, 11) eine am Deckel (2) der Gasentladungskammer (1, 25) isoliert befestigte Zündelektrode (5, 28) in Form eines Ringes mit parallel zur Achse verlaufenden Öffnungen (14) angeordnet ist.

2. Entladungsvorrichtung nach Anspruch 1, dadurch gekennzeichnet, daß der stromleitende Teil der ersten Arbeitselektrode (3) eine Zylinderbuchse (6) mit von der Innenseite der Stirnenden der Zylinderbuchse (6) ausgeführten Kegelflächen, an deren einer der Arbeitsteil der Arbeitselektrode (3) anliegt, darstellt, wobei der Durchmesser des an der Zylinderbuchse (6) anliegenden T-förmigen Arbeitsteiles (7) kleiner als der Durchmesser der Zylinderbuchse (6) ist.

3. Entladungsvorrichtung nach Anspruch 1 oder 2, dadurch gekennzeichnet, daß der an der Innenseite angeordnete Ansatz der zweiten Arbeitselektrode (27) in Form eines Angusses (29) halb toroidaler Form ausgeführt ist, der dem Arbeitsteil (7) der ersten Arbeitselektrode (3) zugekehrt ist, und von der entgegengesetzten Seite des Ansatzes eine Isolationsbuchse (30) angeordnet ist, deren am Arbeitsteil (7) der ersten Arbeitselektrode (3) anliegendes Stirnende kegelig ausgebildet und auf der Kegelfläche mindestens ein Ringdurchlaß (31) ausgeführt ist, wobei die zweite Arbeitselektrode (27) am Gehäuse der Entladungskammer (25) befestigt ist.

4. Entladungsvorrichtung nach einem der Ansprüche 1 bis 3, dadurch gekennzeichnet, daß der Ring der Zündelektrode (28) aus zwei symmetrischen Teilen (32, 33) besteht, die mit der Möglichkeit einer Bewegung des einen Teiles (32) in bezug auf den anderen Teil (33) zueinander angeordnet sind.

5. Entladungsvorrichtung nach einem der Ansprüche 1 bis 4, dadurch gekennzeichnet, daß die stromzuführenden Elemente als voneinander durch ein Dielektrikum (44) getrennte flache Stromschienen (42, 43) ausgebildet und am Gehäuse (40) der Entladungsvorrichtung starr befestigt sind.

6. Entladungsvorrichtung nach einem der Ansprüche 1 bis 5, dadurch gekennzeichnet, daß am Deckel (2) der Gasentladungskammer (1; 25) Kanäle (15) für die Luftzufuhr zum Bereich der maximalen Plasmawirkung und für die Luftableitung aus diesem Bereich ausgeführt sind.

## Claims

1. A discharge device for metal machining and welding by means of magnetic pulses, comprising a housing (16; 40) with current-supply elements and a discharge chamber (1; 25), in the interior of which two working electrodes (3, 4) and an ignition electrode (5; 28) are disposed around an axis and an insulating bush (12) is disposed between the working electrodes, one of the working electrodes being electrically connected to the positive potential and the other working electrode being connected via the inductor to the negative potential of a condenser battery (19), characterised in that the discharge chamber (1; 25) is fixed on the housing (16; 40), the one first working electrode (3) which is connected via the current-supply elements to the negative potential of the condenser battery (19) comprising a conductive working part (7) of T-shaped section, which is coupled to the working electrode (3), while the second working electrode (4, 27) which is separated from the first working electrode (3) by the insulating bush (12) and is disposed coaxially to the first working electrode (3) consists of a bush at whose one end facing the working part (7) of the first working electrode (3) lugs (9, 10) on the outside and inside form a second enlarged working part (11) and an ignition electrode (5, 28) in the form of a ring having apertures (14) extending parallel to the axis and insulatingly fixed on the cover (2) of the gas discharge chamber (1, 5) is disposed in the gap between the two working parts (7, 11).

2. A discharge device according to claim 1, characterised in that the conductive part of the first working electrode (3) is in the form of a cylindrical bush (6) having conical surfaces extending from the inside of the end faces of the cylindrical bush (6), against one of which conical surfaces the working part of the working electrode (3) bears, the diameter of the T-shaped working part (7) which bears against the cylindrical bush (6) being smaller than the diameter of the cylindrical bush (6).

3. A discharge device according to claim 1 or 2, characterised in that the lug disposed on the inside of the second working electrode (27) is in the form of a deadhead (29) of semi-toroidal shape facing the working part (7) of the first working electrode (3), and from the opposite side of the lug there is disposed an insulating bush (30), whose end face bearing against the working part (7) of the first working electrode (3) is of conical construction, and at least one annular passage (31) is formed on the conical surface, the second working electrode (27) being fixed on the housing of the discharge chamber (25).

4. A discharge device according to any one of claims 1 to 3, characterised in that the ring of the ignition electrode (28) consists of two symmetrical parts (32, 33), which are arranged with the possibility of movement of one part (32) with respect to the other part (33).

5. A discharge device according to any one of claims 1 to 4, characterised in that the current-supply elements are formed as flat busbars (42, 43) separated from one another by a dielectric (44) and are rigidly fixed on the housing (40) of the discharge device.

6. A discharge device according to any one of claims 1 to 5, characterised in that the cover (2) of the gas discharge chamber (1; 25) is formed with ducts (15) for the air supply to the zone of maximum plasma effect and for the discharge of air from said zone.

**Revendications**

1. Dispositif de décharge pour le traitement et le soudage de métaux par impulsions magnétiques, comportant un boîtier (16;40) pourvu d'éléments d'alimentation électrique et une chambre de décharge (1;25) à l'intérieur de laquelle sont disposées, autour d'un axe, deux électrodes de travail (3,4) et une électrode d'amorçage (5;28), une douille isolante (12) étant disposée entre les électrodes de travail, et l'une des électrodes de travail étant reliée électriquement au potentiel positif et l'autre électrode de travail, par l'intermédiaire de l'inducteur, au potentiel négatif d'une batterie de condensateurs (19), **caractérisé** en ce que la chambre de décharge (1;25) est fixée sur le boîtier (16;40), la première électrode de travail (3), reliée par l'intermédiaire des éléments d'alimentation électrique au potentiel négatif de la batterie de condensateurs (19), contenant une partie active électroconductrice (7) à section en T couplée à l'électrode de travail (3), et la seconde électrode de travail (4,27), séparée de la première électrode de travail (3) par la douille isolante (12) et disposée coaxialement à la première électrode de travail (3), étant constituée d'une douille, à l'extrémité tournée vers la partie active (7) de la première électrode de travail (3) de laquelle des appendices (9,10), présents sur le côté extérieur et sur le côté intérieur, forment une seconde partie active agrandie (11), une électrode d'amorçage (5,28), fixée de manière isolée sur le couvercle (2) de la chambre de décharge de gaz (1,25) et se présentant sous la forme d'une bague dotée d'ouvertures (14) s'étendant parallèlement à l'axe, étant disposée dans la fente entre les deux parties actives (7,11).

2. Dispositif de décharge selon la revendication 1, caractérisé en ce que la partie électroconductrice de la première électrode de travail (3) constitue une douille cylindrique (6) présentant des faces coniques, qui partent du côté intérieur des extrémités frontales de la douille cylindrique (6) et contre l'une desquelles s'applique la partie active de l'électrode de travail (3), le diamètre de la partie active en T (7) s'appliquant contre la douille cylindrique (6) étant inférieur au diamètre de la douille cylindrique (6).

3. Dispositif de décharge selon la revendication 1 ou 2, caractérisé en ce que l'appendice de la seconde électrode de travail (27) qui est disposé sur le côté intérieur est réalisé sous la forme d'une pièce venue de fonderie (29) de forme semi-toroïdale, tournée vers la partie active (7) de la première électrode de travail (3), et une douille isolante (30) est disposée sur le côté opposé de l'appendice, douille dont l'extrémité frontale s'appliquant contre la partie active (7) de la première électrode de travail (3) est conique, et au moins un passage annulaire (31) est réalisé sur la face conique, la seconde électrode de travail (27) étant fixée sur le boîtier de la chambre de décharge (25).

4. Dispositif de décharge selon l'une des revendications 1 à 3, caractérisé en ce que la bague de l'électrode d'amorçage (28) est constituée de deux parties symétriques (32,33) qui sont disposées avec possibilité de déplacement d'une partie (32) par rapport à l'autre partie (33).

5. Dispositif de décharge selon l'une des revendications 1 à 4, caractérisé en ce que les éléments d'alimentation électrique sont réalisés sous forme de barres conductrices plates (42,43) séparées l'une de l'autre par un diélectrique (44) et sont fixés rigidement sur le boîtier (40) du dispositif de décharge.

6. Dispositif de décharge selon l'une des revendications 1 à 5, caractérisé en ce que des canaux (15) sont réalisés sur le couvercle (2) de la chambre de décharge de gaz (1;25) pour alimenter en air la région d'action maximale du plasma et pour évacuer l'air de cette région.

FIG. 1

FIG. 2